# EUROPEAN PATENT SPECIFICATION

(11) **EP 3 001 621 B1**
(45) Date of publication and mention of the grant of the patent: **21.03.2018**
(21) Application number: 14800268.6
(22) Date of filing: 29.04.2014
(51) Int. Cl.: H04L 25/02, H04L 27/00

(54) **SIGNAL DEMODULATION METHOD AND DEVICE USING VELOCITY VECTORS OF A MOBILE TERMINAL**
VERFAHREN UND VORRICHTUNG ZUR SIGNALDEMODULATION DURCH VERWENDUNG VON GESCHWINDIGKEITSVEKTOREN IN EINEM MOBILEN ENDGERÄT
PROCÉDÉ ET DISPOSITIF DE DÉMODULATION DE SIGNAL UTILISANT DE VECTEURS DE VITESSE D'UN TERMINAL MOBILE

(30) Priority: 23.05.2013 CN 201310195569
(43) Date of publication of application: 30.03.2016
(73) Proprietor: Xiaomi Inc., Beijing 100085 (CN)
(72) Inventor: WANG, Xiangdong, Beijing 100085 (CN); WU, Zhenghai, Beijing 100085 (CN); GUO, Feng, Beijing 100085 (CN)
(74) Representative: Delumeau, François Guy
(86) International application number: PCT/CN2014/076514
(87) International publication number: WO 2014/187231

(56) References cited:
- EP-A1- 2 490 389
- WO-A2-2012/058600
- CN-A- 102 868 435
- CN-A- 103 269 259
- CN-U- 202 374 290
- US-A1- 2008 171 515

## Description

### TECHNICAL FIELD

The invention generally relates to the technology for developing mobile terminals, and more particularly, to a method for demodulating a signal and a device thereof.

### BACKGROUND

A data transmission rate of communication has been always a user's concern. However, when the user is in a moving state, due to the presence of the Doppler effect, a Doppler frequency shift may be generated. When the user moves with a high velocity, a relatively important Doppler frequency shift may exist when the mobile terminal receives a signal transmitted by a base station. That is to say, a Doppler frequency shift value, i.e. the difference between the frequency of the received signal and the frequency of the signal actually transmitted by the base station, is relatively large, thereby affecting the radio frequency (RF) demodulation accuracy of a communication system, affecting data throughput of communication with the base station, and resulting in a low data transmission rate of communication.

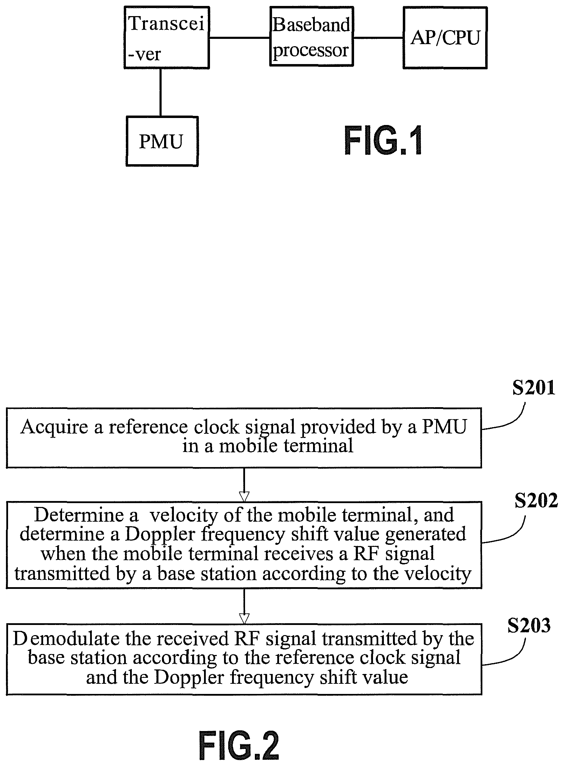

Taking a WCDMA (Wideband Code Division Multiple Access) system as an example, a circuit diagram for a demodulation device of a GPS (Global Positioning System) and a WCDMA system of a mobile terminal is as shown in Fig.1. The signal-processing modules of both the GPS and the WCDMA system function as follows. A transceiver provides a RF-demodulation function, and sends a baseband signal to a baseband processor for processing, then the baseband processor sends data to an AP (application processor) / CPU (Central Processing Unit). The transceiver as shown in Fig.1 requires a reference clock signal for using in the demodulation. The reference clock signal is supplied by a PMU (Pressure Measuring Unit), and the transceiver demodulates WCDMA signals or other RF signals according to the reference clock signal. The demodulation accuracy of the transceiver is decided by the reference clock signal. A higher demodulation accuracy results in a higher data throughput for the communication between the mobile terminal and the base station and a faster data transmission rate for the corresponding communication system. However, the demodulation of the RF signal according to the reference clock signal provided by the PMU does not take into consideration the influence due to the Doppler shift on the demodulation of the RF signals. When the velocity is high, the demodulation accuracy of the RF signals is low, resulting in a low data transmission rate of communication.

Document EP 2 490 389 A1 discloses an apparatus, a method and a computer program for determining a frequency offset between a carier frequency of a received signal and a carrier frequency of a transmitted signal.

Document WO 2012/058600 A2 discloses a system and method of frequency offset compensation for a wireless system between a fast moving radio terminal associated with a locomotive and a stationary radio terminal associated with a base station.

Document US 2008/171515 A1 discloses an apparatus and method for estimating requency offset in a mobile terminal.

### SUMMARY

Embodiments of the invention provide a method and a device for demodulating a signal to solve the problem that data transmission rate of communication is low in presence of a Doppler frequency shift.

According to a first aspect of the invention, there is provided a method for demodulating a signal implemented by a mobile terminal, comprising steps of:
acquiring a reference clock signal provided by a power management unit PMU in the mobile terminal;
determining a velocity of the mobile terminal, and determining, according to the velocity, a Doppler frequency shift value generated when the mobile terminal receives a RF signal transmitted by a base station; and
demodulating, according to the reference clock signal and the Doppler frequency shift value, the received RF signal transmitted by the base station;
wherein, the step of determining a velocity of the mobile terminal, and determining, according to the velocity, a Doppler frequency shift value generated when the mobile terminal receives a RF signal transmitted by a base station, comprises steps of :
   determining velocity vectors of the mobile terminal at two set time points through a global positioning system GPS;
   determining a modulus value |ΔV| of a difference between the velocity vectors at the two set time points;
   determining an angle α between directions of the velocity vectors at the two set time points; and
   determining the Doppler frequency shift value Fd generated when the mobile terminal receives the RF signal transmitted by the base station according to a formula Fd=|ΔV|*cosα/λ for calculating a Doppler frequency shift value, where λ is a radio wavelength; or searching for the Doppler frequency shift value corresponding to the determined |ΔV| and α in a preset relationship mapping between |ΔV| and α value ranges and Doppler frequency shift values.

According to a second aspect of the invention, there is provided a device for demodulating a signal implemented in a mobile terminal, comprising:
an acquiring unit configured to acquire a reference clock signal provided by a power management unit PMU in the mobile terminal;
a determining unit configured to determine a velocity of the mobile terminal, and determine, according to the velocity, a Doppler frequency shift value generated when the mobile terminal receives a RF signal transmitted by a base station; and
a demodulating unit configured to demodulate, according to the reference clock signal and the Doppler frequency shift value, the received RF signal transmitted by the base station;
wherein, the determining unit comprises:
   a first determining module configured to determine velocity vectors of the mobile terminal at two set time points through a global positioning system GPS;
   a second determining module configured to determine a modulus value |ΔV| of a difference between the velocity vectors at the two set time points;
   a third determining module configured to determine an angle α between directions of the velocity vectors at the two set time points; and
   a fourth determining module configured to determine the Doppler frequency shift value Fd generated when the mobile terminal receives the RF signal transmitted by the base station according to a formula Fd=|ΔV|*cosα/λ for calculating a Doppler frequency shift value, where λ is a radio wavelength; or a searching module configured to search for the Doppler frequency shift value corresponding to the determined |ΔV| and α in a preset relationship mapping between |ΔV| and α value ranges and Doppler frequency shift values.

According to an embodiment, in the device:
the determining unit is implemented by a Conditional Access (CA) module coupled to the PMU, and the superimposing module is implemented by the CA module; and
the demodulating module is implemented by a receiver coupled to the CA module, the receiver being further configured to acquire the RF signal transmitted by the base station and the clock signal for demodulation determined by the CA module.

According to an embodiment, in the device:
the determining unit is implemented by a processing unit and a receiver coupled to the PMU and the processing unit, the receiver being configured to determine the velocity and the processing unit being configured to determine, according to the velocity determined by the receiver, the Doppler frequency shift value generated when the mobile terminal receives the RF signal transmitted by the base station;
the acquiring unit and the demodulating module are implemented by the receiver, the receiver being further configured to acquire the RF signal transmitted by the base station and the Doppler frequency shift value determined by the processing unit.

The present invention also provides a computer program, which when executing on a processor of a device, performs the above method.

The embodiments of the invention may have the following advantageous effects:
The embodiments of the invention provide a method and a device for demodulating a signal, to reduce the influence due to the Doppler frequency shift on the data transmission rate of communication. In the demodulation of a received RF signal transmitted by a base station, after a reference clock signal provided by a PMU is acquired, a velocity of a mobile terminal needs to be further determined, a Doppler frequency shift value generated when the mobile terminal receives a RF signal transmitted by a base station is determined according to the velocity, and the received RF signal transmitted by the base station is demodulated according to the reference clock signal and the Doppler frequency shift value. Since the influence resulted from the Doppler frequency shift is taken into consideration in the demodulation of the RF signal transmitted by the base station, the demodulation accuracy is relatively high, thus avoiding the problem that the demodulation accuracy is low and the data transmission rate of communication is low in presence of the Doppler frequency shift.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig.1 is a schematic diagram of a GPS and WCDMA demodulation device according to an exemplary embodiment;
Fig.2 is a flow chart of a method for demodulating a signal according to an exemplary embodiment;
Fig.3 is a first flow chart of a method for determining a Doppler frequency shift according to an exemplary embodiment;
Fig.4 is a second flow chart of a method for determining a Doppler frequency shift according to an exemplary embodiment;
Fig.5 is a flow chart of a demodulating method based on a reference clock signal and a Doppler frequency shift value, according to an exemplary embodiment;
Fig.6 is a flow chart of a preferred demodulating method according to an exemplary embodiment;
Fig.7 is a first block diagram of a device for demodulating a signal according to an exemplary embodiment;
Fig.8a is a first block diagram of a determination unit according to an exemplary embodiment;
Fig.8b is a second block diagram of a determination unit according to an exemplary embodiment;
Fig.9 is a block diagram of a demodulating unit according to an exemplary embodiment;
Fig. 10 is a second block diagram of a device for demodulating a signal according to an exemplary embodiment; and
Fig. 11 is a third block diagram of a device for demodulating a signal according to an exemplary embodiment.

### DETAILED DESCRIPTION

The embodiments of the invention provide a method and a device for demodulating a signal to reduce the influence due to the Doppler frequency shift on the data transmission rate of communication. In the demodulation of a received RF signal transmitted by a base station, after a reference clock signal provided by a PMU is acquired, a velocity of a mobile terminal needs to be further determined, a Doppler frequency shift value generated when the mobile terminal receives a RF signal transmitted by a base station is determined according to the velocity, and the received RF signal transmitted by the base station is demodulated according to the reference clock signal and the Doppler frequency shift value. Since the influence due to the Doppler frequency shift is taken into consideration in the demodulation of the RF signal transmitted by a base station, the demodulation accuracy is relatively high, thus avoiding the problem that the demodulation accuracy is low and the data transmission rate of communication is low in presence of the Doppler frequency shift.

As shown in Fig.2, a method for demodulating a signal is provided by an embodiment of the invention, which includes the following steps.

In step S201, a reference clock signal provided by a PMU in a mobile terminal is acquired.

In step S202, a velocity of the mobile terminal is determined, and a Doppler frequency shift value generated when the mobile terminal receives a RF signal transmitted by a base station is determined according to the velocity.

In step S203, the received RF signal transmitted by the base station is demodulated according to the reference clock signal and the Doppler frequency shift value.

Before the demodulation of a received RF signal transmitted by a base station, a reference clock signal provided by a PMU is acquired, a velocity of a mobile terminal is determined, a Doppler frequency shift value generated when the mobile terminal receives a RF signal transmitted by a base station is determined according to the velocity. Thereby in the demodulation of the RF signal transmitted by the base station, the RF signal transmitted by the base station is demodulated according to the reference clock signal provided by the PMU and the Doppler frequency shift value, thus avoiding the problem that the demodulation accuracy of the signal is low and the data transmission rate of communication is low in presence of the Doppler frequency shift.

There are many implementation methods for determining a Doppler frequency shift value generated when the mobile terminal receives a RF signal transmitted by a base station according to the velocity in step S202, and embodiments of the invention provide two implementation methods for determining a Doppler frequency shift value according to the velocity.

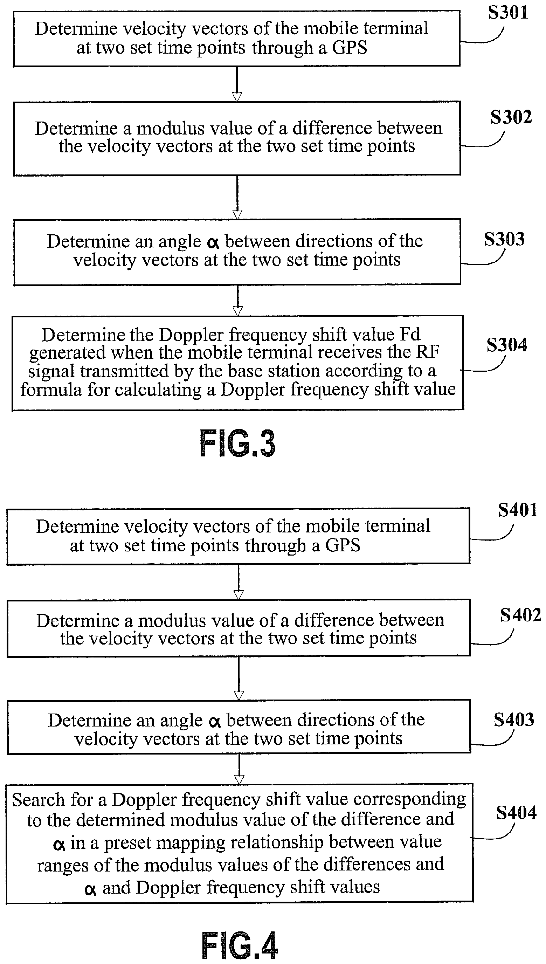

As shown in Fig.3, a first method for determining a Doppler frequency shift value generated when the mobile terminal receives a RF signal transmitted by a base station according to the velocity includes the following steps.

In step S301, velocity vectors of the mobile terminal at two set time points is determined through a GPS.

In step S302, a modulus value |ΔV| of a difference between the velocity vectors at the two set time points is determined.

In step S303, an angle α between directions of the velocity vectors at the two set time points is determined.

In step S304, the Doppler frequency shift value Fd generated when the mobile terminal receives the RF signal transmitted by the base station is determined according to a formula Fd=|ΔV|*cosα/λ for calculating a Doppler frequency shift value, where λ is a radio wavelength.

Both the |ΔV| and α may be determined through the GPS. The two set time points may be set as desired by one skilled in the art. For example, it may be set according to the time of acquiring the reference clock signal provided by the PMU. For example, the two set time points may be set as the time of acquiring two set reference clock signals. The two set reference clock signals may be two reference clock signals whose acquiring time are most close to the current time.

Such a method for determining a Doppler frequency shift value has a high accuracy, and may ensure a high accuracy in the demodulation of the RF signal transmitted by the base station according to the Doppler frequency shift value and the reference clock signal. Thereby, a high data transmission rate of communication may be achieved.

As shown in Fig.4, a second method for determining a Doppler frequency shift value according to the velocity may include the following steps.

In step S401, velocity vectors of the mobile terminal at two set time points are determined through a global positioning system (GPS).

In step S402, a modulus value |ΔV| of a difference between the velocity vectors at the two set time points is determined.

In step S403, an angle α between directions of the velocity vectors at the two set time points is determined.

In step S404, the Doppler frequency shift value corresponding to the determined |ΔV| and α is searched for in a preset relationship mapping between |ΔV| and α values ranges and Doppler frequency shift values.

For example, the relationship mapping between the value ranges of the modulus value of the difference between the velocity vectors of the mobile terminal at the two set time points acquired by the GPS and the angle between the directions of the velocity vectors of the mobile terminal at the two set time points acquired by the GPS, may be determined according to Fd=|ΔV|*cosα/λ, and the accuracy of the relationship mapping may be set as desired by one skilled in the art.

The relationship mapping between the value ranges of the modulus value of the difference between the velocity vectors of the mobile terminal at the two set time points acquired by the GPS and the angle between the directions of the velocity vectors of the mobile terminal at the two set time points acquired by the GPS is preset. When a Doppler frequency shift value needs to be determined, only a Doppler frequency shift value corresponding to the modulus value of the difference between the velocity vectors of the mobile terminal at the two set time points acquired by the GPS and the angle between the directions of the velocity vectors of the mobile terminal at the two set time points acquired by the GPS needs to be determined in the relationship mapping. Thus, the mobile bears a low processing load.

However, those skilled in the art may adopt other possible methods to implement the determining of a Doppler frequency shift value according to the velocity. The two implementation methods are provided herein as examples, and others will not be described in detail herein.

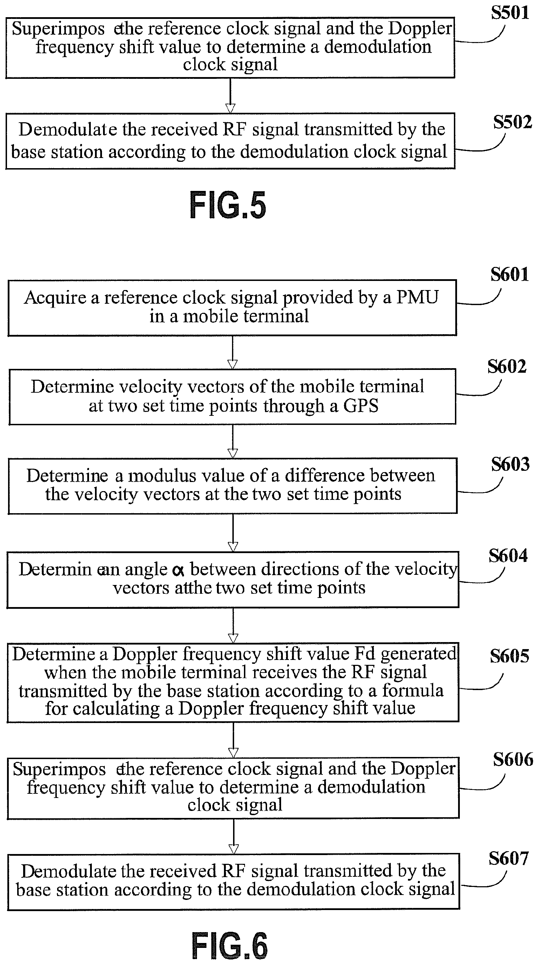

An embodiment of the invention provides a method for demodulating the received RF signal transmitted by the base station according to the reference clock signal and the Doppler frequency shift value. As shown in Fig.5, the method includes the following steps.

In step S501, the reference clock signal and the Doppler frequency shift value are superimposed to determine a clock signal for demodulation.

In step S503, the received RF signal transmitted by the base station is demodulated according to the clock signal for demodulation.

In the implementation, after the Doppler frequency shift value is determined, the Doppler frequency shift value and the reference clock signal may be superimposed to determine a demodulation clock signal. Then, the received RF signal transmitted by the base station is demodulated according to the clock signal for demodulation. Thereby, that the problem that RF demodulation accuracy of the communication system is low and the data transmission rate of communication is low due to the presence of the Doppler frequency shift is avoided.

A demodulating method is provided by an embodiment of the invention. As shown in Fig.6, the method includes the following steps.

In step S601, a reference clock signal provided by a PMU in a mobile terminal is acquired.

In step S602, velocity vectors of the mobile terminal at two set time points is determined through a GPS.

In step S603, a modulus value |ΔV| of a difference between the velocity vectors at the two set time points is determined.

In step S604, an angle α between directions of the velocity vectors at the two set time points is determined.

In step S605, the Doppler frequency shift value Fd generated when the mobile terminal receives the RF signal transmitted by the base station is determined according to a formula Fd=|ΔV|*cosα/λ for calculating a Doppler frequency shift value, where λ is a radio wavelength.

In step S606, the reference clock signal and the Doppler frequency shift value are superimposed to determine a clock signal for demodulation.

In step S607, the received RF signal transmitted by the base station is demodulated according to the clock signal for demodulation.

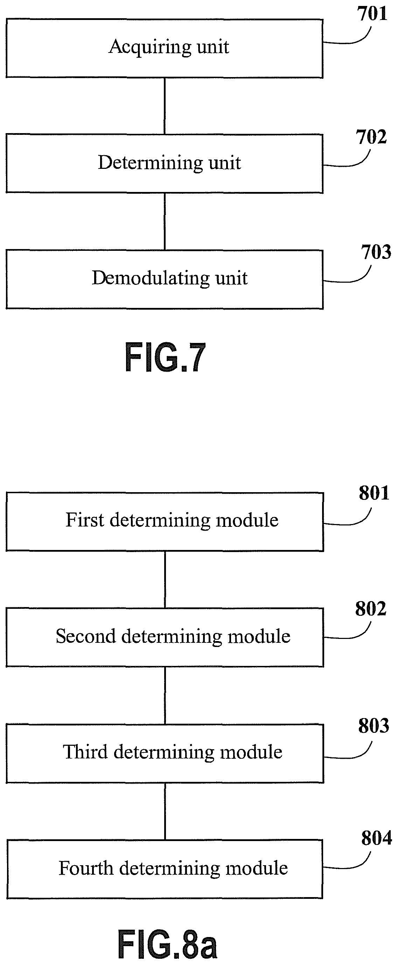

As shown in Fig.7, a device for demodulating a signal is provided by an embodiment of the invention, including:
an acquiring unit 701 configured to acquire a reference clock signal provided by a PMU in a mobile terminal;
a determining unit 702 configured to determine a velocity of the mobile terminal, and determine, according to the velocity, a Doppler frequency shift value generated when the mobile terminal receives a RF signal transmitted by a base station; and
a demodulating unit 703 configured to demodulate the received RF signal transmitted by the base station according to the reference clock signal and the Doppler frequency shift value.

Before the demodulation of a received RF signal transmitted by a base station, a reference clock signal provided by a PMU is acquired by the acquiring unit 701, a velocity of a mobile terminal is determined by the determining unit 702, a Doppler frequency shift value generated when the mobile terminal receives a RF signal transmitted by a base station is determined according to the velocity. Thereby, in the demodulation of the RF signal transmitted by the base station, the RF signal transmitted by the base station is demodulated by the demodulating unit 703 according to the reference clock signal provided by the PMU and the Doppler frequency shift value, thus avoiding the problem that the demodulation accuracy of a signal is low and the data transmission rate of communication is low in presence of the Doppler frequency shift.

There are many implementation methods for the determining unit 702 to determine a Doppler frequency shift value according to the moving velocity, and embodiments of the invention provide two implementation methods for determining a Doppler frequency shift value according to the velocity.

A first method for determining a Doppler frequency shift value according to the velocity is as follows.

As shown in Fig.8a, the determining unit 702 includes:
a first determining module 801 configured to determine velocity vectors of the mobile terminal at two set time points through a GPS;
a second determining module 802 configured to determine a modulus value |ΔV| of a difference between the velocity vectors at the two set time points;
a third determining module 803 configured to determine an angle α between directions of the velocity vectors at the two set time points; and
a fourth determining module 804 configured to determine the Doppler frequency shift value Fd generated when the mobile terminal receives the RF signal transmitted by the base station according to a formula Fd=|ΔV|*cosα/λ for calculating a Doppler frequency shift value, where λ is a radio wavelength.

Both the |ΔV| and α may be determined through the GPS. The two set time points may be set as desired by one skilled in the art. For example, it may be set according to acquiring time of the reference clock signal provided by the PMU. For example, the two set time points may be set as the acquiring time of two set reference clock signals. The two set reference clock signals may be two reference clock signals having acquiring time that are most close to a current time.

Such a method for determining a Doppler frequency shift value has a high accuracy, and may ensure a high accuracy in demodulation of the RF signal transmitted by the base station according to the Doppler frequency shift value and the reference clock signal. Thereby, a high data transmission rate of communication may be achieved.

A second method for determining a Doppler frequency shift value according to the velocity is as follows.

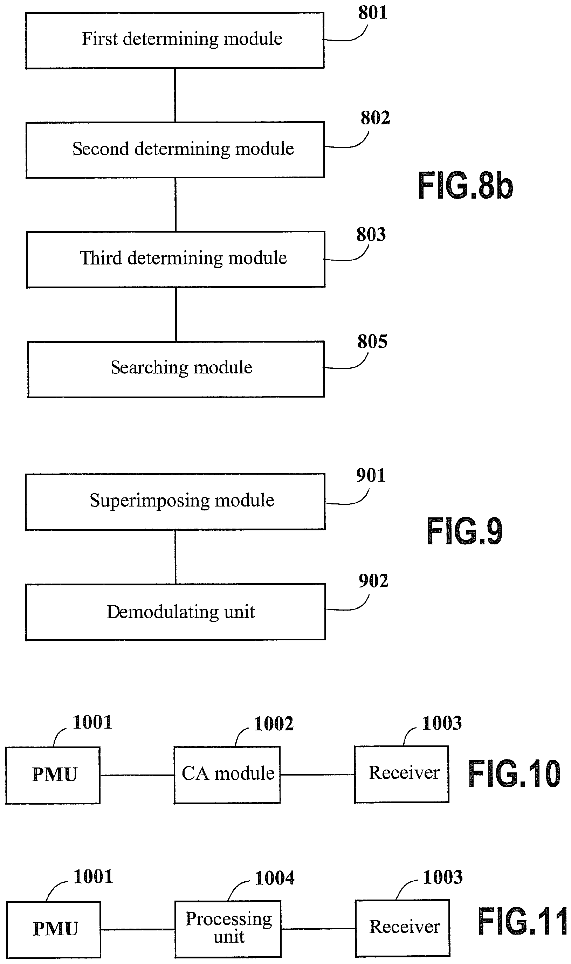

As shown in Fig.8b, the determining unit 702 includes:
a first determining module 801 configured to determine velocity vectors of the mobile terminal at two set time points through a GPS;
a second determining module 802 configured to determine a modulus value |ΔV| of a difference between the velocity vectors at the two set time points;
a third determining module 803 configured to determine an angle α between directions of the velocity vectors at the two set time points; and
a searching module 805 configured to search for the Doppler frequency shift value corresponding to the determined |ΔV| and α in a preset relationship mapping between |ΔV| and α value ranges and Doppler frequency shift values.

For example, the relationship mapping between the value ranges of the modulus value of the difference between the velocity vectors of the mobile terminal at the two set time points acquired by the GPS and the angle between the directions of the velocity vectors of the mobile terminal at the two set time points acquired by the GPS, may be determined according to Fd=|ΔV|*cosα/λ, and the accuracy of the relationship mapping may be set as desired by one skilled in the art.

The relationship mapping between the value ranges of the modulus value of the difference between the velocity vectors of the mobile terminal at the two set time points acquired by the GPS and the angle between the directions of the velocity vectors of the mobile terminal at the two set time points acquired by the GPS is preset. When a Doppler frequency shift value needs to be determined, only a Doppler frequency shift value corresponding to the modulus value of the difference between the velocity vectors of the mobile terminal at the two set time points acquired by the GPS and the angle between the directions of the velocity vectors of the mobile terminal at the two set time points acquired by the GPS needs to be determined according to the relationship mapping. Thus, the mobile bears a low processing load.

An implementation for the demodulating unit 703 is provided by an embodiment of the invention. As shown in Fig.9, the demodulating unit 703 includes:
a superimposing module 901 configured to superimpose the reference clock signal and the Doppler frequency shift value to determine a clock signal for demodulation; and
a demodulating unit 902 configured to demodulate the received RF signal transmitted by the base station according to the clock signal for demodulation.

In the implementation, after the Doppler frequency shift value is determined, the Doppler frequency shift value and the reference clock signal may be superimposed to determine a demodulation clock signal. Then, the received RF signal transmitted by the base station is demodulated according to the demodulation clock signal. Thereby, that the RF demodulation accuracy of the communication system is low and the data transmission rate of communication is slow due to the presence of the Doppler frequency shift is avoided.

As shown in Fig.10, a device for demodulating a signal is provided by an embodiment of the invention, including:
a PMU 1001 configured to provide a reference clock signal;
a CA module 1002 coupled to the PMU, and configured to determine a velocity of a mobile terminal, determine a Doppler frequency shift value generated when the mobile terminal receives a RF signal transmitted by a base station according to the velocity, and determine a clock signal for demodulation according to the Doppler frequency shift value and the reference clock signal provided by the PMU; and
a receiver 1003 coupled to the CA module, and configured to acquire the RF signal transmitted by the base station and the clock signal for demodulation determined by the CA module 1002, and demodulate the RF signal transmitted by the base station according to the clock signal for demodulation.

Before the demodulation of a received RF signal transmitted by a base station, a reference clock signal provided by the PMU 1001 is acquired by the receiver 1003, a velocity of a mobile terminal is determined by the CA module 1002, a Doppler frequency shift value generated when the mobile terminal receives a RF signal transmitted by a base station is determined according to the velocity, and a demodulation clock signal is determined according to the Doppler frequency shift value and the reference clock signal provided by the PMU 1001. Then the RF signal transmitted by the base station is demodulated by the receiver 1003 according to the clock signal for demodulation. Thereby, the problem that the demodulation accuracy is low and the data transmission rate of communication is low due to the presence of the Doppler frequency shift is avoided.

There are many implementation methods for the CA module 1002 to determine a Doppler frequency shift value according to the velocity, and embodiments of the invention provide one implementation method for the CA module 1002 to determine a Doppler frequency shift value according to the velocity as follows:
determining velocity vectors of the mobile terminal at two set time points through a global positioning system GPS;
determining a modulus value |ΔV| of a difference between the velocity vectors at the two set time points;
determining an angle α between directions of the velocity vectors at the two set time points; and
determining the Doppler frequency shift value Fd generated when the mobile terminal receives the RF signal transmitted by the base station according to a formula Fd=|ΔV|*cosα/λ for calculating a Doppler frequency shift value, where λ is a radio wavelength.

Both the |ΔV| and α may be determined through the GPS. The two set time points may be set as desired by one skilled in the art. For example, it may be set according to acquiring time of the reference clock signal provided by the PMU. For example, the two set time points may be set as the acquiring time of two set reference clock signals. The two set reference clock signals may be two reference clock signals having acquiring time that are most close to the current time.

Such a method for determining a Doppler frequency shift value has a high accuracy, and may ensure a high accuracy in demodulation of the RF signal transmitted by the base station according to the Doppler frequency shift value and the reference clock signal. Thereby, a high data transmission rate of communication is achieved.

However, those skilled in the art may adopt other possible methods to implement determining of a Doppler frequency shift value by the CA module 1002 according to the velocity. One implementation method is provided herein as an example, and others will not be described in detail herein.

In an implementation, after the Doppler frequency shift value is determined by the CA module 1002, the Doppler frequency shift value and the reference clock signal may be superimposed to determine a clock signal for demodulation. Then, the received RF signal transmitted by the base station is demodulated according to the clock signal for demodulation. Thereby, that the RF demodulation accuracy of the communication system is low and the data transmission rate of communication is low due to the presence of the Doppler frequency shift is avoided. That is to say, the CA module 1002 comprises a direct digital frequency synthesizer DDS configured to superimpose the reference clock signal and the Doppler frequency shift value.

The CA module 1002 determining the clock signal for demodulation according to the Doppler frequency shift value and the reference clock signal, is configured to:
superimpose the reference clock signal and the Doppler frequency shift value through the DDS to determine the clock signal for demodulation.

Further, in order to prevent other modules in the mobile terminal, which require using the RF signal reflecting the velocity acquired by the GPS, from being affected when the CA module 1002 determines the velocity through the GPS, the RF signal reflecting the velocity acquired by the GPS may be coupled to the CA module 1002. In this regard, preferably, the demodulating device provided by the invention further includes:
a coupling module coupled to the CA module 1002, and configured to couple a RF signal reflecting the velocity acquired by a GPS to the CA module 1002.

As shown in Fig. 11, a device for demodulating a signal is also provided by an embodiment of the invention, including:
a PMU 1001 configured to provide a reference clock signal;
a processing unit 1004 configured to determine a Doppler frequency shift value generated when a mobile terminal receives a RF signal transmitted by a base station according to a velocity determined by a receiver;
the receiver 1003 coupled to the PMU 1001 and the processing unit 1004, and configured to determine the velocity of the mobile terminal, acquire the RF signal transmitted by the base station, the reference clock signal provided by the PMU 1001 and the Doppler frequency shift value determined by the processing unit 1004, and demodulate the RF signal transmitted by the base station according to the reference clock signal and the Doppler frequency shift value.

Before the demodulation of a received RF signal transmitted by a base station, a reference clock signal provided by the PMU 1001 is acquired by the receiver 1003, a velocity of a mobile terminal is determined by the receiver 1003, a Doppler frequency shift value generated when the mobile terminal receives a RF signal transmitted by a base station is determined by the processing unit 1004 according to the velocity, and then the RF signal transmitted by the base station is demodulated by the receiver 1003 according to the reference clock signal and the Doppler frequency shift value, thereby the problem that the demodulation accuracy is low and the data transmission rate of communication is low due to the presence of the Doppler frequency shift may be avoided.

The processing unit 1004 may be:
an AP (application processor); or
a CPU (central processing unit).

However, those skilled in the art may adopt other possible devices as the processing unit 1004. The two examples are provided as the processing unit 1004, and others will not be described in detail herein.

Before the demodulation of a received RF signal transmitted by a base station, a reference clock signal provided by the PMU 1001 is acquired by the receiver 1003, a velocity of a mobile terminal is determined by a GPS, a Doppler frequency shift value is determined by the processing unit 1004 according to the velocity determined by the GPS, and the RF signal transmitted by the base station may be demodulated by the receiver 1003 according to the Doppler frequency shift value and the reference clock signal provided by the PMU 1001. The accuracy of the velocity determined by the GPS is high, and thus the accuracy of the Doppler frequency shift value determined according to the velocity is high, and the demodulation accuracy of the RF signal transmitted by the base station according to the reference clock signal and the Doppler frequency shift value is high, thus avoiding the problem that the data transmission rate of communication is low in presence of the Doppler frequency shift.

There are many implementation methods for the processing unit 1004 to determine a Doppler frequency shift value according to the velocity, and embodiments of the invention provide one implementation method for the processing unit 1004 to determine a Doppler frequency shift value according to the velocity as follows:
determining velocity vectors of the mobile terminal at two set time points through a global positioning system GPS;
determining a modulus value |ΔV| of a difference between the velocity vectors at the two set time points;
determining an angle α between directions of the velocity vectors at the two set time points; and
searching for the Doppler frequency shift value corresponding to the determined |ΔV| and α in a preset relationship mapping between |ΔV| and α value ranges and Doppler frequency shift values.

For example, the relationship mapping between the value ranges of the modulus value of the difference between the velocity vectors of the mobile terminal at the two set time points acquired by the GPS and the angle between the directions of the velocity vectors of the mobile terminal at the two set time points acquired by the GPS, may be determined according to Fd=|ΔV|*cosα/λ, and the accuracy of the mapping relationship may be set as desired by one skilled in the art.

The relationship mapping between the value ranges of the modulus value of the difference between the velocity vectors of the mobile terminal at the two set time points acquired by the GPS and the angle between the directions of the velocity vectors of the mobile terminal at the two set time points acquired by the GPS is preset. When a Doppler frequency shift value needs to be determined, only a Doppler frequency shift value corresponding to the modulus value of the difference between the velocity vectors of the mobile terminal at the two set time points acquired by the GPS and the angle between the directions of the velocity vectors of the mobile terminal at the two set time points acquired by the GPS needs to be determined according to the relationship mapping. Thus, the mobile bears a low processing load.

However, those skilled in the art may adopt other possible methods for the processing unit 1004 to implement the determination of a Doppler frequency shift value according to the velocity. One implementation method is provided herein as an example, and others will not be described in detail herein.

In an implementation, the Doppler frequency shift value and the reference clock signal may be superimposed by the receiver 1003 to determine a clock signal for demodulation. Then, the received RF signal transmitted by the base station is demodulated according to the clock signal for demodulation. Thereby, that the RF demodulation accuracy of the communication system is low and the data transmission rate of communication is low due to the presence of the Doppler frequency shift is avoided.

However, those skilled in the art may adopt other possible methods to implement the demodulation of the received RF signal transmitted by the base station by the receiver 1003 according to the reference clock signal and the Doppler frequency shift value, which thus will not be described in detail herein.

The embodiments of the invention provide a method and a device for demodulating a signal, to reduce the influence on the data transmission rate of communication due to the Doppler frequency shift. In the demodulation of a received RF signal transmitted by a base station, after a reference clock signal provided by a PMU is acquired, a velocity needs to be further determined, a Doppler frequency shift value generated when the mobile terminal receives a RF signal transmitted by a base station is determined according to the velocity, and the received RF signal transmitted by the base station is demodulated according to the reference clock signal and the Doppler frequency shift value. Since the influence due to the Doppler frequency shift is taken into consideration in the demodulation of the RF signal transmitted by a base station, the demodulation accuracy is high, thus avoiding the problem that the data transmission rate of communication is low in presence of the Doppler frequency shift.

It should be understood by those skilled in the art that, the embodiments of the invention may be implemented as methods, systems or computer program products. Therefore, the invention may take forms of embodiments of full hardware, full software, or a combination of software and hardware. Furthermore, the invention may take forms of computer program products executed on one or more computer usable storage medias (including but not limited to disk storage, CD-ROM and optical storage, etc.) containing computer usable program codes.

The invention is described with reference to the method, the device (system) and the flowchart and/or a block diagram of a computer program product according to the embodiments of the invention. It should be understood that each process and/or block in the flowcharts and/or block diagrams, and combinations of processes and/or blocks in the flowcharts and/or block diagrams, may be realized by computer program instructions. These computer program instructions may be supplied to a generate-purpose computer, a special-purpose computer, an embedded processor, or processors of other programmable data processing devices, to create a machine, such that a device for realizing functions designated in one or more processes in the flowcharts and/or in one or more blocks in the block diagrams, may be produced by instructions performed by a computer or processors of other programmable data processing devices.

These computer program instructions may also be stored in a computer readable storage that can boot a computer or other programmable data processing devices to operate in a specific way, such that an artifact comprising an instruction device may be produced by the instructions stored in said computer readable storage, and said instruction device realizes the functions designated in one or more processes in the flowcharts and/or in one or more blocks in the block diagrams.

These computer program instructions may further be loaded into a computer or other programmable data processing devices, such that a series of operating steps may be performed on the computer or other programmable data processing devices, so as to generate processes realized by the computer. Thereby, steps for realizing the functions designated in one or more processes in the flowcharts and/or in one or more blocks in the block diagrams may be provided by the instructions executed on the computer or other programmable data processing devices.

Although preferred embodiments of the invention have been described, those skilled in the art may make additional alteration and modification to these embodiments once they learn the basic inventive concept. Therefore, the appended claims is intended to be interpreted as covering the preferred embodiments and all of the alterations and modifications falling into the scope of the invention.

## Claims

1. A method for demodulating a signal implemented by a mobile terminal, the method comprising steps of:
acquiring (S201) a reference clock signal provided by a power management unit 'PMU' in the mobile terminal;
determining (S202) a velocity of the mobile terminal, and determining, according to the velocity, a Doppler frequency shift value generated when the mobile terminal receives a RF signal transmitted by a base station; and
demodulating (S203), according to the reference clock signal and the Doppler frequency shift value, the received RF signal transmitted by the base station;
**characterized in that**, the step of determining (S202) a velocity of the mobile terminal, and determining, according to the velocity, a Doppler frequency shift value generated when the mobile terminal receives a RF signal transmitted by a base station, comprises steps of :
determining (S301, S602) velocity vectors of the mobile terminal at two set time points through a global positioning system, GPS; determining (S302, S603) a modulus value |ΔV| of a difference between the velocity vectors at the two set time points;
determining (S303, S604) an angle α between directions of the velocity vectors at the two set time points; and
determining (S304, S605) the Doppler frequency shift value Fd generated when the mobile terminal receives the RF signal transmitted by the base station according to a formula Fd=|ΔV|*cosα/λ for calculating a Doppler frequency shift value, where λ is a radio wavelength; or searching (S404) for the Doppler frequency shift value corresponding to the determined |ΔV| and α in a preset relationship mapping between |ΔV| and α value ranges and Doppler frequency shift values.

2. The method according to claim 1, **characterized in that**, the step of demodulating (S203), according to the reference clock signal and the Doppler frequency shift value, the received RF signal transmitted by the base station, comprises steps of:
superimposing (S501, S606) the reference clock signal and the Doppler frequency shift value to determine a clock signal for demodulation; and
demodulating (S502, S607) the received RF signal transmitted by the base station according to the clock signal for demodulation.

3. A device for demodulating a signal implemented in a mobile terminal, the device comprising:
an acquiring unit (701) configured to acquire a reference clock signal provided by a power management unit, PMU, in the mobile terminal;
a determining unit (702) configured to determine a velocity of the mobile terminal, and determine, according to the velocity, a Doppler frequency shift value generated when the mobile terminal receives a RF signal transmitted by a base station; and
a demodulating unit (703) configured to demodulate, according to the reference clock signal and the Doppler frequency shift value, the received RF signal transmitted by the base station;
**characterized in that**, the determining unit (702) comprises:
a first determining module (801) configured to determine velocity vectors of the mobile terminal at two set time points through a global positioning system, GPS;
a second determining module (802) configured to determine a modulus value |ΔV| of a difference between the velocity vectors at the two set time points;
a third determining module (803) configured to determine an angle α between directions of the velocity vectors at the two set time points; and
a fourth determining module (804) configured to determine the Doppler frequency shift value Fd generated when the mobile terminal receives the RF signal transmitted by the base station according to a formula Fd=|ΔV|*cosα/λ for calculating a Doppler frequency shift value, where λ is a radio wavelength; or a searching module (805) configured to search for the Doppler frequency shift value corresponding to the determined |ΔV| and α in a preset relationship mapping between |ΔV| and α value ranges and Doppler frequency shift values.

4. The device according to claim 3, **characterized in that**, the demodulating unit (703) comprises:
a superimposing module (901) configured to superimpose the reference clock signal and the Doppler frequency shift value to determine a clock signal for demodulation; and
a demodulating module (902) configured to demodulate the received RF signal transmitted by the base station according to the clock signal for demodulation.

5. The device according to claim 4, **characterized in that**:
the determining unit (702) is implemented by a Conditional Access, CA, module (1002) coupled to the PMU ( 1001), and the superimposing module (901) is implemented by the CA module (1002); and
the demodulating module (902) is implemented by a receiver (1003) coupled to the CA module (1002), the receiver (1003) being further configured to acquire the RF signal transmitted by the base station and the clock signal for demodulation determined by the CA module (1002).

6. The device according to claim 5, **characterized in that**, the superimposing module (901) is implemented by a direct digital frequency synthesizer, DDS, comprised in the CA module (1002), the CA module (1002) being configured to superimpose the reference clock signal and the Doppler frequency shift value through the DDS to determine the clock signal for demodulation.

7. The device according to claim 5 or 6, **characterized in that**, the device further comprises:
a coupling module coupled to the CA module (1002), and configured to couple a RF signal reflecting the velocity acquired by the GPS to the CA module (1002).

8. The device according to claim 3 or 4, **characterized in that**:
the determining unit (702) is implemented by a processing unit (1004) and a receiver (1003) coupled to the PMU (1001) and the processing unit (1004), the receiver (1003) being configured to determine the velocity and the processing unit (1004) being configured to determine, according to the velocity determined by the receiver (1003), the Doppler frequency shift value generated when the mobile terminal receives the RF signal transmitted by the base station;
the acquiring unit (701) and the demodulating module (703) are implemented by the receiver (1003), the receiver (103) being further configured to acquire the RF signal transmitted by the base station and the Doppler frequency shift value determined by the processing unit (1004).

9. The device according to claim 8, **characterized in that**, the processing unit (1004) is:
an application processor, AP; or
a central processing unit, CPU.

10. A computer program, which when executing on a processor of a device, performs a method according to any one of claims 1 to 2.

## Patentansprüche

1. Von einem mobilen Endgerät implementiertes Verfahren zur Demodulation eines Signals, wobei das Verfahren die Schritte umfasst:
Erfassen (S201) eines Referenztaktsignals, das von einer Energieverwaltungseinheit 'PMU' in dem mobilen Endgerät bereitgestellt wird,
Bestimmen (S202) einer Geschwindigkeit des mobilen Endgeräts und Bestimmen entsprechend der Geschwindigkeit eines Wertes einer Doppler-Frequenzverschiebung, die erzeugt wird, wenn das mobile Endgerät ein von einer Basisstation gesendetes HF-Signal empfängt, und
Demodulieren (S203) entsprechend dem Referenztaktsignal und dem Wert der Doppler-Frequenzverschiebung des empfangenen, von der Basisstation gesendeten HF-Signals,
**dadurch gekennzeichnet, dass** der Schritt des Bestimmens (S202) einer Geschwindigkeit des mobilen Endgeräts und des Bestimmens entsprechend der Geschwindigkeit eines Wertes der Doppler-Frequenzverschiebung, die erzeugt wird, wenn das mobile Endgerät ein von einer Basisstation gesendetes HF-Signal empfängt, folgende Schritte umfasst:
Bestimmen (S301, S602) von Geschwindigkeitsvektoren des mobilen Endgeräts zu zwei festgelegten Zeitpunkten über ein globales Positionsbestimmungssystem (GPS),
Bestimmen (S302, S603) eines Moduluswertes |ΔV| einer Differenz zwischen den Geschwindigkeitsvektoren zu den zwei festgelegten Zeitpunkten,
Bestimmen (S303, S604) eines Winkels α zwischen Richtungen der Geschwindigkeitsvektoren zu den zwei festgelegten Zeitpunkten und
Bestimmen (S304, S605) des Wertes Fd der Doppler-Frequenzverschiebung, die erzeugt wird, wenn das mobile Endgerät das von der Basisstation gesendete HF-Signal empfängt, gemäß der Formel Fd = |ΔV| * cosa / λ zur Berechnung eines Wertes der Doppler-Frequenzverschiebung, wobei λ eine Funkwellenlänge ist, oder Suchen (S404) nach dem Wert der Doppler-Frequenzverschiebung, der dem bestimmten |ΔV| und α entspricht, in einer voreingestellten Beziehungsabbildung zwischen |ΔV|- und α-Wertebereichen und Werten einer Doppler-Frequenzverschiebung.

2. Verfahren nach Anspruch 1, **dadurch gekennzeichnet, dass** der Schritt des Demodulierens (S203) entsprechend dem Referenztaktsignal und dem Wert der Doppier-Frequenzverschiebung des empfangenen, von der Basisstation gesendeten HF-Signals folgende Schritte umfasst:
Überlagern (S501, S606) des Referenztaktsignals und des Wertes der Doppler-Frequenzverschiebung, um ein Taktsignal zur Demodulation zu bestimmen, und
Demodulieren (S502, S607) des empfangenen, von der Basisstation gesendeten HF-Signals entsprechend dem Taktsignal zur Demodulation.

3. In einem mobilen Endgerät implementierte Vorrichtung zur Demodulation eines Signals, wobei die Vorrichtung umfasst:
eine Erfassungseinheit (701), die konfiguriert ist, ein Referenztaktsignal zu erfassen, das von einer Energieverwaltungseinheit PMU in dem mobilen Endgerät bereitgestellt wird,
eine Bestimmungseinheit (702), die konfiguriert ist, eine Geschwindigkeit des mobilen Endgeräts zu bestimmen und entsprechend der Geschwindigkeit einen Wert einer Doppier-Frequenzverschiebung zu bestimmen, die erzeugt wird, wenn das mobile Endgerät ein von einer Basisstation gesendetes HF-Signal empfängt, und
eine Demodulationseinheit (703), die konfiguriert ist, entsprechend dem Referenztaktsignal und dem Wert der Doppler-Frequenzverschiebung das empfangene, von der Basisstation gesendete HF-Signal zu demodulieren,
**dadurch gekennzeichnet, dass** die Bestimmungseinheit (702) umfasst:
ein erstes Bestimmungsmodul (801), das konfiguriert ist, Geschwindigkeitsvektoren des mobilen Endgeräts zu zwei festgelegten Zeitpunkten über ein globales Positionsbestimmungssystem GPS zu bestimmen,
ein zweites Bestimmungsmodul (802), das konfiguriert ist, einen Moduluswert |ΔV| einer Differenz zwischen den Geschwindigkeitsvektoren zu den zwei festgelegten Zeitpunkten zu bestimmen,
ein drittes Bestimmungsmodul (803), das konfiguriert ist, einen Winkel α zwischen Richtungen der Geschwindigkeitsvektoren zu den zwei festgelegten Zeitpunkten zu bestimmen, und
ein viertes Bestimmungsmodul (804), das konfiguriert ist, den Wert Fd der Doppler-Frequenzverschiebung, die erzeugt wird, wenn das mobile Endgerät das von der Basisstation gesendete HF-Signal empfängt, gemäß einer Formel Fd = |ΔV| * cosα / λ zur Berechnung eines Wertes einer Doppler-Frequenzverschiebung zu bestimmen, wobei A eine Funkwellenlänge ist, oder ein Suchmodul (805), das konfiguriert ist, nach dem Wert der Doppler-Frequenzverschiebung, der dem bestimmen |ΔV| und α entspricht, in einer voreingestellten Beziehungsabbildung zwischen |ΔV|- und α-Wertebereichen und Werten der Doppler-Frequenzverschiebung zu suchen.

4. Vorrichtung nach Anspruch 3, **dadurch gekennzeichnet, dass** die Demodulationseinheit (703) umfasst:
ein Überlagerungsmodul (901), das konfiguriert ist, das Referenztaktsignal und den Wert der Doppler-Frequenzverschiebung zu überlagern, um ein Taktsignal zur Demodulation zu bestimmen, und
ein Demodulationsmodul (902), das konfiguriert ist, das empfangene, von der Basisstation gesendete HF-Signal entsprechend dem Taktsignal zur Demodulation zu demodulieren.

5. Vorrichtung nach Anspruch 4, **dadurch gekennzeichnet, dass**:
die Bestimmungseinheit (702) durch ein Modul (1002) für bedingten Zugriff CA, das mit der PMU (1001) verbunden ist, implementiert ist und das Überlagerungsmodul (901) durch das CA-Modul (1002) implementiert ist, und
das Demodulationsmodul (902) durch einen Empfänger (1003), der mit dem CA-Modul (1002) verbunden ist, implementiert ist, wobei der Empfänger (1003) ferner konfiguriert ist, das von der Basisstation gesendete HF-Signal und das Taktsignal zur Demodulation, das von dem CA-Modul (1002) bestimmt wird, zu erfassen.

6. Vorrichtung nach Anspruch 5, **dadurch gekennzeichnet, dass** das Überlagerungsmodul (901) durch einen direkten digitalen Frequenzsynthesizer (DDS) implementiert ist, der in dem CA-Modul (1002) beinhaltet ist, wobei das CA-Modul (1002) konfiguriert ist, das Referenztaktsignal und den Wert der Doppler-Frequenzverschiebung durch den DDS zu überlagern, um das Taktsignal zur Demodulation zu bestimmen.

7. Vorrichtung nach Anspruch 5 oder 6, **dadurch gekennzeichnet, dass** die Vorrichtung ferner umfasst:
ein Kopplungsmodul, das mit dem CA-Modul (1002) verbunden ist und konfiguriert ist, ein HF-Signal, das die durch das GPS erfasste Geschwindigkeit widerspiegelt, an das CA-Modul (1002) zu koppeln.

8. Vorrichtung nach Anspruch 3 oder 4, **dadurch gekennzeichnet, dass**:
die Bestimmungseinheit (702) durch eine Verarbeitungseinheit (1004) und einen Empfänger (1003), der mit der PMU (1001) und der Verarbeitungseinheit (1004) verbunden ist, implementiert ist, wobei der Empfänger (1003) konfiguriert ist, die Geschwindigkeit zu bestimmen, und die Verarbeitungseinheit (1004) konfiguriert ist, gemäß der durch den Empfänger (1003) bestimmten Geschwindigkeit, den Wert der Doppier-Frequenzverschiebung, die erzeugt wird, wenn das mobile Endgerät das HF-Signal, das durch die Basisstation gesendet wird, empfängt, zu bestimmen,
die Erfassungseinheit (701) und das Demodulationsmodul (703) durch den Empfänger (1003) implementiert sind, wobei der Empfänger (1003) ferner konfiguriert ist, das HF-Signal, das durch die Basisstation gesendet wird, und den Wert der Doppler-Frequenzverschiebung, der durch die Verarbeitungseinheit (1004) bestimmt wird, zu erfassen.

9. Vorrichtung nach Anspruch 8, **dadurch gekennzeichnet, dass** die Verarbeitungseinheit (1004):
ein Anwendungsprozessor (AP) oder
eine zentrale Verarbeitungseinheit (CPU) ist.

10. Computerprogramm, das bei Ausführung auf einem Prozessor einer Vorrichtung ein Verfahren nach einem der Ansprüche 1 bis 2 durchführt.

## Revendications

1. Procédé de démodulation d'un signal exécuté par un terminal mobile, le procédé comprenant les étapes de :
acquisition (S201) d'un signal d'horloge de référence fourni par une unité de gestion de l'énergie « PMU » dans le terminal mobile ;
détermination (S202) d'une vitesse du terminal mobile, et de détermination, selon la vitesse, d'une valeur de décalage de fréquence Doppler générée lorsque le terminal mobile reçoit un signal RF transmis par une station de base ; et
de démodulation (S203), selon le signal d'horloge de référence et la valeur de décalage de fréquence Doppler, du signal RF reçu transmis par la station de base ;
**caractérisé en ce que** l'étape de détermination (S202) d'une vitesse du terminal mobile, et de détermination, selon la vitesse, d'une valeur de décalage de fréquence Doppler générée lorsque le terminal mobile reçoit un signal RF transmis par une station de base, comprend les étapes de :
détermination (S301, S602) de vecteurs de vitesse du terminal mobile à deux moments définis par le biais d'un système de positionnement global (GPS) ;
détermination (S302, S603) d'une valeur de module |ΔV| d'une différence entre les vecteurs de vitesse aux deux moments définis ;
détermination (S303, S604) d'un angle α entre les directions des vecteurs de vitesse aux deux moments définis ; et
de détermination (S304, S605) de la valeur de décalage de fréquence Doppler Fd générée lorsque le terminal mobile reçoit le signal RF transmis par la station de base selon une formule Fd=|ΔV|*cosα/λ qui permet de calculer une valeur de décalage de fréquence Doppler, où λ est une longueur d'onde radio ; ou de recherche (S404) de la valeur de décalage de fréquence Doppler qui correspond au |ΔV| déterminé et à α au sein d'un mappage relationnel prédéfini entre les plages de |ΔV| et de la valeur α et les valeurs de décalage de fréquence Doppler.

2. Procédé selon la revendication 1, **caractérisé en ce que** l'étape de démodulation (S203), selon le signal d'horloge de référence et la valeur de décalage de fréquence Doppler, du signal RF reçu transmis par la station de base comprend les étapes de :
superposition (S501, S606) du signal d'horloge de référence et de la valeur de décalage de fréquence Doppler afin de déterminer un signal d'horloge pour la démodulation ; et
de démodulation (S502, S607) du signal RF reçu transmis par la station de base selon le signal d'horloge destiné à la démodulation.

3. Dispositif de démodulation d'un signal exécuté dans un terminal mobile, le dispositif comprenant :
une unité d'acquisition (701) configurée pour acquérir un signal d'horloge de référence fourni par une unité de gestion de l'énergie, PMU, dans le terminal mobile ;
une unité de détermination (702) configurée pour déterminer une vitesse du terminal mobile, et pour déterminer, selon la vitesse, une valeur de décalage de fréquence Doppler générée lorsque le terminal mobile reçoit un signal RF transmis par une station de base ; et
une unité de démodulation (703) configurée pour démoduler, selon le signal d'horloge de référence et la valeur de décalage de fréquence Doppler, le signal RF reçu transmis par la station de base ;
**caractérisé en ce que** l'unité de détermination (702) comprend :
un premier module de détermination (801) configuré pour déterminer les vecteurs de vitesse du terminal mobile à deux moments définis par le biais d'un système de positionnement global (GPS) ;
un second module de détermination (802) configuré pour déterminer une valeur de module |ΔV| d'une différence entre les vecteurs de vitesse aux deux moments définis ;
un troisième module de détermination (803) configuré pour déterminer un angle α entre les directions des vecteurs de vitesse aux deux moments définis ; et
un quatrième module de détermination (804) configuré pour déterminer la valeur de décalage de fréquence Doppler Fd générée lorsque le terminal mobile reçoit le signal RF transmis par la station de base selon une formule Fd=|ΔV|*cosα/λ qui permet de calculer une valeur de décalage de fréquence Doppler, où λ est une longueur d'onde radio ; ou un module de recherche (805) configuré pour rechercher la valeur de décalage de fréquence Doppler qui correspond au |ΔV| déterminé et à α au sein d'un mappage relationnel prédéfini entre les plages de |ΔV| et de la valeur α et les valeurs de décalage de fréquence Doppler.

4. Dispositif selon la revendication 3, **caractérisé en ce que** l'unité de démodulation (703) comprend :
un module de superposition (901) configuré pour superposer le signal d'horloge de référence et la valeur de décalage de fréquence Doppler afin de déterminer un signal d'horloge pour la démodulation ; et
un module de démodulation (902) configuré pour démoduler le signal RF reçu transmis par la station de base selon le signal d'horloge destiné à la démodulation.

5. Dispositif selon la revendication 4, **caractérisé en ce que** :
l'unité de détermination (702) est mise en oeuvre par un module d'accès conditionnel, CA, (1002) relié au PMU (1001), et le module de superposition (901) est mis en oeuvre par le module CA (1002) ; et
le module de démodulation (902) est mis en oeuvre par un récepteur (1003) relié au module CA (1002), le récepteur (1003) étant en outre configuré pour acquérir le signal RF transmis par la station de base et le signal d'horloge destiné à la démodulation déterminé par le module CA (1002).

6. Dispositif selon la revendication 5, **caractérisé en ce que** le module de superposition (901) est mis en oeuvre par un synthétiseur de fréquence numérique directe, DDS, compris dans le module CA (1002), le module CA (1002) étant configuré pour superposer le signal d'horloge de référence t la valeur de décalage de fréquence Doppler par le biais du DDS afin de déterminer le signal d'horloge destiné à la démodulation.

7. Dispositif selon la revendication 5 ou 6, **caractérisé en ce que** le dispositif comprend en outre :
un module de couplage relié au module CA (1002), et configuré pour coupler un signal RF qui reflète la vitesse acquis par le GPS au module CA (1002).

8. Dispositif selon la revendication 3 ou 4, **caractérisé en ce que** :
l'unité de détermination (702) est mise en oeuvre par une unité de traitement (1004) et un récepteur (1003) relié au PMU (1001) et à l'unité de traitement (1004), le récepteur (1003) étant configuré pour déterminer la vitesse et l'unité de traitement (1004) étant configurée pour déterminer, selon la vitesse déterminée par le récepteur (1003), la valeur de décalage de fréquence Doppler générée lorsque le terminal mobile reçoit le signal RF transmis par la station de base ;
l'unité d'acquisition (701) et le module de démodulation (703) sont mis en oeuvre par le récepteur (1003), le récepteur (1003) étant en outre configuré pour acquérir le signal RF transmis par la station de base et la valeur de décalage de fréquence Doppler déterminée par l'unité de traitement (1004).

9. Dispositif selon la revendication 8, **caractérisé en ce que** l'unité de traitement (1004) est :
un processeur d'application, AP ; ou
une unité centrale de traitement, CPU.

10. Programme informatique qui, lorsqu'il est exécuté sur un processeur d'un dispositif, exécute un procédé selon l'une quelconque des revendications 1 à 2.
